# EUROPEAN PATENT APPLICATION

(11) **EP 2 450 620 A1**
(43) Date of publication of application: **09.05.2012**
(21) Application number: 10794142.9
(22) Date of filing: 29.06.2010
(51) Int. Cl.: F21S 2/00, F21V 29/00, F21Y 101/02

(54) **LIGHT-SOURCE DEVICE**

(30) Priority: 02.07.2009 JP 2009157728
(71) Applicant: CCS Inc., Kyoto-City, Kyoto 602-8011 (JP)
(72) Inventor: YONEDA, Kenji, Kyoto-city Kyoto 602-8011 (JP); TOGAWA, Takuzo, Kyoto-city Kyoto 602-8011 (JP)
(74) Representative: Müller - Hoffmann & Partner
(86) International application number: PCT/JP2010/061047
(87) International publication number: WO 2011/001973

(57) **Abstract**

To provide a light source device having an excellent cooling efficiency to be usable in a state of multiple light source devices stacked in a vertical direction, the light source device is used as one of the multiple light source devices stacked in a vertical direction, and includes a casing having a sufficiently small size in height relative to a size in depth and a size in width, wherein, in a wall thereof, an intake hole is formed for taking in outside air into the casing and an exhaust hole is formed for exhausting air from the inside, a fan arranged inside the casing in a manner that a rotating shaft thereof is inclined with respect to the height direction of the casing and partitioning the interior of the casing into a front chamber and a rear chamber so as to form an air flow from the intake hole to the exhaust hole, a light source accommodated inside the front chamber of the casing, and a heat radiation fin provided to be thermally connected to the light source inside the front chamber of the casing, wherein the intake hole is formed in the wall of the front chamber of the casing and the exhaust hole is formed in a rear wall of the casing.

## Description

### Technical Field

The present invention relates to a light source device adapted to be used in a state of multiple light source devices stacked in a vertical direction so as to have an excellent cooling efficiency.

### Background Art

Conventionally, a device such as a light source device that generates a large amount of heat is configured to have an intake hole and exhaust hole formed in a casing thereof so that outside air is taken in through the intake hole to that the heat is absorbed by the taken in outside air and then the heated air of a high temperature is exhausted through the exhaust hole so as to cool the device.

Therefore, as a built-in fan to be equipped in such a device, it is preferable to use a large sized fan having a large exhaust capacity from a viewpoint of a cooling efficiency. However, it is preferable that such a light source device etc. for use as one of the stacked multiple devices has a small size in a height direction from a viewpoint of stability, and therefore it is difficult to include a built-in large sized fan.

In Patent Literature 1, disclosed is a projector provided with a first case and a second case movable to each other so as to be able to include a built-in large sized fan (see Fig. 16 thereof). However, since the projector is configured to move one of the cases at a time of performing projections, it is difficult to be used in a state of a plurality of projectors being stacked.

### Citation List

### Patent Literature

Patent Literature 1: JP2007-93992A

### Summary of Invention

### Technical Problem

The present invention has been made considering the problem mentioned above and an essential object thereof is to provide a light source device having an excellent cooling efficiency and capable of using the same as one of multiple light source devices stacked in a vertical direction.

### Solution to Problem

That is, a light source device pertaining to the present invention is adapted to be used as one of multiple light source devices stacked in a vertical direction, and includes: a casing having a sufficiently small size in height relative to a size in depth and a size in width, wherein, in a wall thereof, an intake hole is formed for taking in outside air into the casing and an exhaust hole is formed for exhausting air from the inside; a fan arranged inside the casing in a manner that a rotating shaft thereof is inclined with respect to the height direction of the casing and partitioning the interior of the casing into a front chamber and a rear chamber so as to form an air flow from the intake hole to the exhaust hole; a light source accommodated inside the front chamber of the casing; and a heat radiation fin provided to be thermally connected to the light source inside the front chamber of the casing, wherein the intake hole is formed in the wall of the front chamber of the casing and the exhaust hole is formed in a rear wall of the casing.

With this configuration, since the fan is accommodated inside the casing in a manner that the rotating shaft thereof is inclined with respect to the height direction of the casing, a space inside the casing can be effectively used so as to be able to accommodate a large sized fan having a large exhaust capacity, compared to a case of accommodating the fan inside the casing so that the rotating shaft is perpendicular or parallel to the height direction of the casing. Thus, according to the present invention, the cooling efficiency of the light source device can be improved. Further, it is preferable that an angle of the rotating shaft with respect to a horizontal direction is below 45 degrees (i.e., equal to or larger than 45 degrees with respect to the height direction).

Further, according to the present invention, since the intake hole is formed in the wall of the front chamber of the casing while the exhaust hole is formed in the rear wall of the casing, it is hard to cause an event that air of a high temperature exhausted from the light source device is sucked into the casing again from the intake holes of the other light source devices stacked in the vertical direction.

Moreover, according to the present invention, since the intake hole is formed in the wall of the front chamber of the casing accommodating the light source and the heat radiation fin and a forced air flow is formed by the fan from the intake hole to the exhaust hole, the heat radiated from the light source can be efficiently exhausted to the outside of the casing so as to be able to cool the light source device.

Although a fan generally including a blade wheel and a frame surrounding the blade wheel is used as the fan, if there exists a gap between the frame and the casing, air may remain there in some cases. For this reason, it is preferable that the frame is contacted with a top wall, a bottom wall and side walls of the casing, and with this configuration, since there exists no gap between the frame and the casing, the air heated by the heat radiated from the light source can be efficiently exhausted outside the casing without remaining inside the casing.

As a specific aspect of the light source device pertaining to the present invention, there is exemplified one, for example, including a cylindrical member provided to be protruded from the front wall of the casing so as to be adapted to introduce light emitted by the light source from a proximal end thereof and derive the light from a tip end thereof, wherein a light guide is connectable to the tip end thereof.

### Advantageous Effects of Invention

According to the present invention as described above, there can be obtained a light source device having an excellent cooling efficiency without being affected by the exhaust heat of the upper and lower devices even though the multiple devices are stacked in the vertical direction to be used.

### Brief Description of Drawings

[Fig. 1] Fig. 1 is a perspective view of a light source device pertaining to one embodiment of the present invention when seeing from a top thereof.
[Fig. 2] Fig. 2 is a perspective view of the light source device pertaining to the same embodiment when seeing from a bottom thereof.
[Fig. 3] Fig. 3 is a perspective view showing an interior of a light source device pertaining to one embodiment of the present invention.
[Fig. 4] Fig. 4 is a partially lateral section view of the light source device pertaining to the same embodiment.
[Fig. 5] Fig. 5 is a side view of the light source device pertaining to the same embodiment.
[Fig. 6] Fig. 6 is a side view of a light source device pertaining to another embodiment.
[Fig. 7] Fig. 7 is a side view of a light source device pertaining to further another embodiment.
[Fig. 8] Fig. 8 is a side view of a light source device pertaining to further another embodiment.
[Fig. 9] Fig. 9 is a side view of a light source device pertaining to further another embodiment.

### Description of Embodiments

One embodiment of the present invention is described below with reference to the drawings.

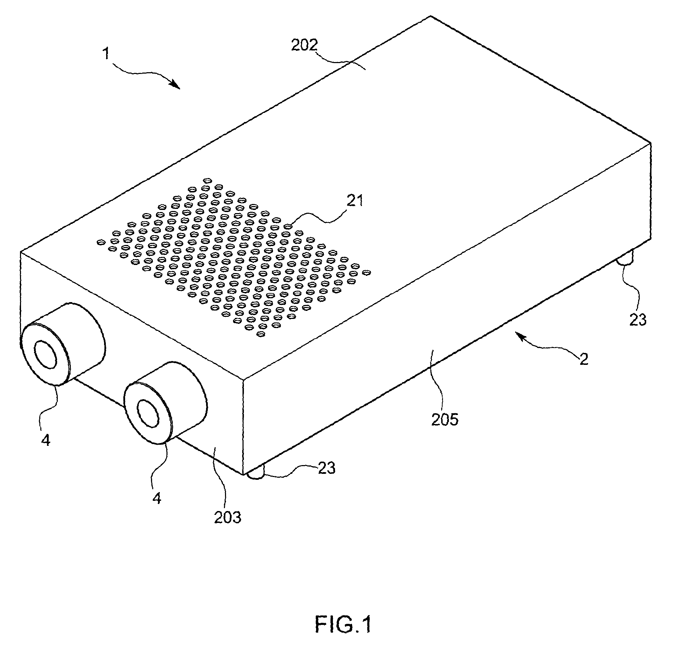

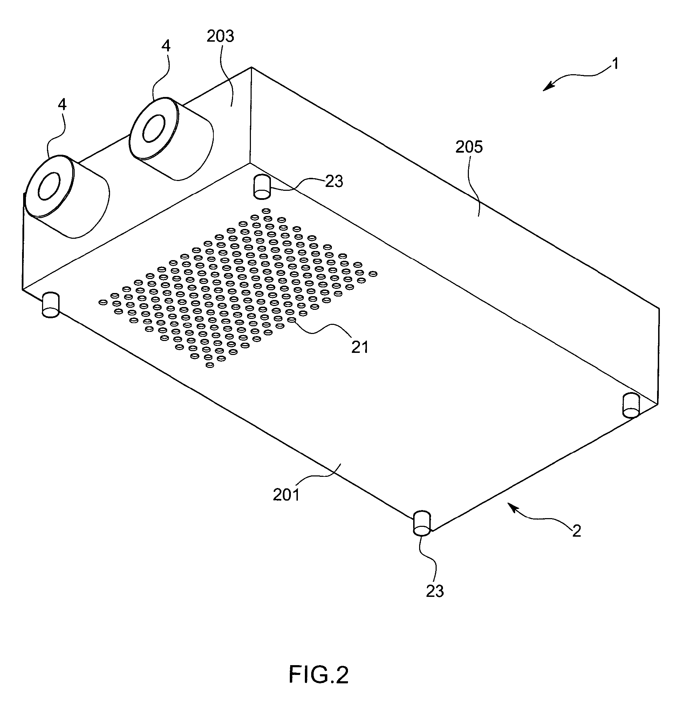

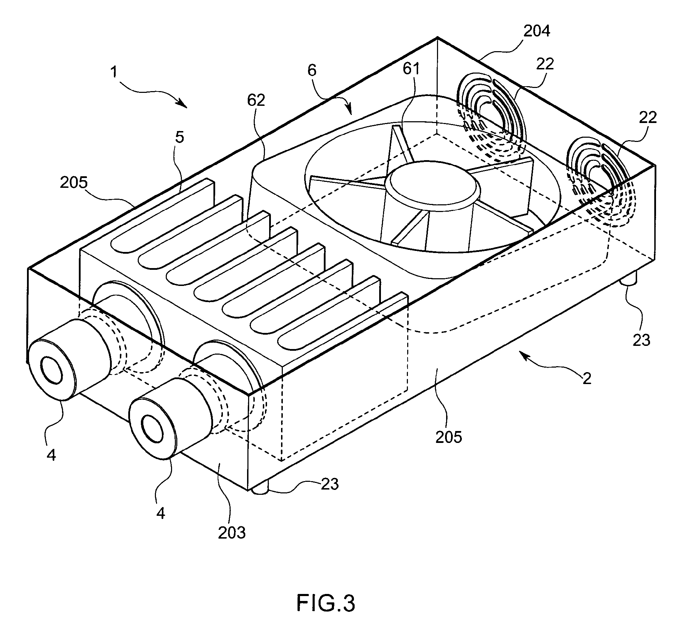

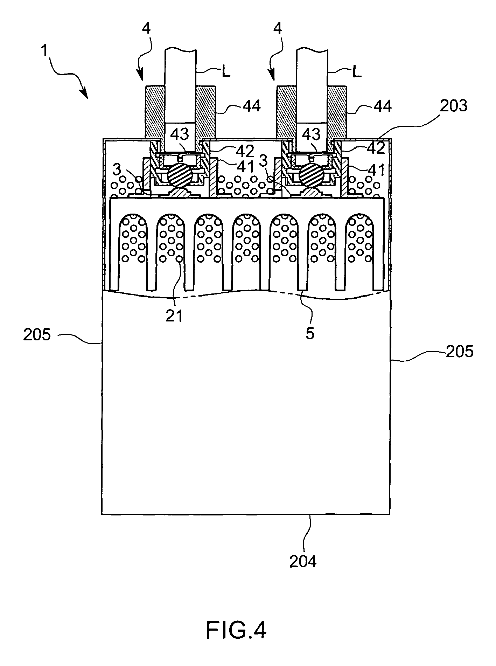

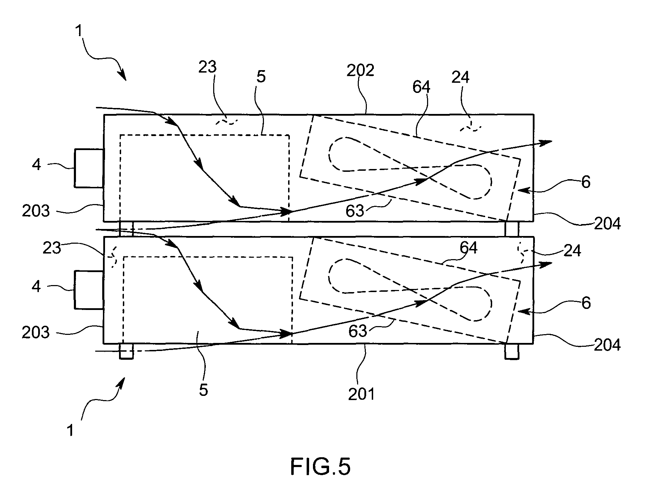

A light source device 1 pertaining to the present embodiment is adapted to be used in a state of multiple light source devices being stacked in a vertical direction and, as shown in Figs. 1 to 5, it includes a casing 2 having a size in height sufficiently small relative to a size in depth and a size in width, LED units 3 accommodated in the casing 2, cylindrical members 4 with their tip ends protruding from a front surface 203 of the casing 2 so as to derive light emitted by the LED units 3 from the tip ends, a heat radiation fin 5 provided with the LED units 3 on the proximal surface thereof, and a fan 6 provided inside the casing 2 so as to have a rotating shaft thereof inclined with respect to a height direction of the casing.

Next, each of the parts is described below in detail.
The casing 2 is configured to have a size in height sufficiently small relative to a size in depth and a size in width thereof and it is formed of, e.g., an electrolytic zinc-coated steel sheet (SECC). Intake holes 21 are formed in forward portions of a bottom wall 201 and a top wall 202 of the casing 2 and exhaust holes 22 are formed in a rear wall 204 of the casing 2, and feet 23 are provided at four corners of the bottom surface 201. Moreover, the tip ends of the cylindrical members 4 are provided on a front wall 203 of the casing 2 so as to be protruded therefrom, and further a power supply switch and a LED light quantity adjustment knob although not shown are also provided on the front wall 203 of the casing 2.

Each of the LED units 3 includes a high intensity LED and a printed board installing the LED and it is fixed to a proximal surface of the heat radiation fin 5 to be described later. In the present embodiment, two LED units 3 are provided and these units are adapted to emit lights of different colors so that the illumination intensities and colors of the lights emitted from the light source device 1 can be changed by changing light emission ratios and light emission quantities of these various LEDs.

Each of the cylindrical members 4 is provided to penetrate the front wall 203 of the casing 2 with its tip end protruded from the front surface 203 of the casing 2 and it includes an outer tube 41, an inner tube 42 and a connecting part 44.

The outer tube 41 is formed in a substantially rotating body shape having openings at both ends thereof with its one end opening portion fixed to the proximal surface of the heat radiation fin 5 in a manner of surrounding the LED unit 3.

The inner tube 42 is formed in a substantially rotating body shape having openings at both ends thereof with its proximal portion accommodated inside the outer tube 41. A ball lens 43 is accommodated inside the proximal portion of the inner tube 42 so as to be adapted to condense the light emitted from the LED unit 3 at a front portion thereof. Thus, a utilization rate of the light from the LED unit 3 can be improved.

The connecting part 44 is formed in a substantially rotating body shape having its proximal portion fitted to a tip end portion of the inner tube 42 and its tip end portion protruded from the front surface 203 of the casing 2 so as to make it possible to attach a light guide L.

The heat radiation fin 5 is formed in a comb-teeth-like shape having a prescribed thickness while fixing the LED unit 3 to the proximal surface thereof so as to transfer the heat generated by the LED unit 3 to the heat radiation fin 5. The heat radiation fin 5 is provided in the vicinity of the intake holes 21 and is located on a flow passage of the air between the intake holes 21 and the exhaust holes 22.

The fan 6 includes a blade wheel 61 and a frame 62 surrounding the blade wheel 61, and it is located between the heat radiation fin 5 and the rear wall 204 of the casing 2 in a manner that the rotating shaft of the blade wheel 61 is inclined with respect to the height direction of the casing 2 so that the interior of the casing 2 is portioned into a front chamber 23 and a rear chamber 24. In the present embodiment, the fan 6 is arranged inside the casing 2 in a manner that an intake face 63 thereof is oriented downward and an exhaust face 64 thereof is oriented upward. The fan 6 sucks outside air into the casing 2 through the intake holes 21 and exhausts the air inside the casing 2 to the outside through the exhaust holes 22 so as to form a forced air flow from the intake holes 21 to the exhaust holes 22.

The fan 6 is accommodated inside the casing 2 in a manner that the frame 62 is contacted with the top wall 202, the bottom wall 201 and side walls 205 of the casing 2 so that there exists no gap between the frame 62 and the casing 2.

When the light source device 2 as described above is operated, the blade wheel 61 of the fan 6 is rotated by a motor (not shown) so as to form a forced air flow from a side of the intake face 63 to a side of the exhaust face 64 so that the outside air is sucked into the casing 2 through the intake holes 21. The sucked outside air absorbs the heat generated by the LED units 3 and radiated from the heat radiation fin 5 and the like so as to be heated to a high temperature. The heated air of a high temperature is exhausted to the outside of the casing 2 through the exhaust holes 22.

Meanwhile, the light emitted from the LED unit 3 is introduced into the cylindrical member 4 and condensed by the ball mirror 43 so as to be derived to the light guide L attached to the tip end of the cylindrical member 4.

According to the present embodiment as described above, since the fan 6 is accommodated inside the casing 2 in a manner that the rotating shaft thereof is inclined with respect to the height direction of the casing 2, a space inside the casing 2 can be effectively used so as to be able to accommodate a large sized fan 6 having a large exhaust capacity, compared to a case of accommodating the fan 6 inside the casing 2 so that the rotating shaft is perpendicular or parallel to the height direction of the casing 2. Thus, according to the present embodiment, the cooling efficiency of the light source device 1 can be improved.

Further, according to the present embodiment, since the intake holes 21 are formed in the bottom wall 201 and the top wall 202 of the front chamber 23 of the casing 2 while the exhaust holes 22 are formed in the rear wall 204 of the casing 2, it is hard to cause an event that air of a high temperature exhausted from the exhaust holes 22 is sucked into the casing 2 again from the intake holes 21 of the other light source devices 1 stacked in the vertical direction.

Moreover, according to the present embodiment, since the intake holes 21 are formed in the vicinity of the heat radiation fin 5 and a forced air flow is formed by the fan 6 from the intake holes 21 to the exhaust holes 22, the heat radiated from the LED units 3 can be efficiently exhausted to the outside of the casing 2 so as to be able to cool the light source device 1.

Further, in the present embodiment, since the frame 62 of the fan 6 is contacted with the top wall 202, the bottom wall 201 and the side walls 205 of the casing 2 without forming a gap between the frame 62 and the casing 2, the air heated by the heat radiated from the LED units 3 can be efficiently exhausted outside the casing 2 without remaining inside the casing 2.

It is noted that the present invention is not limited to the embodiment described above.

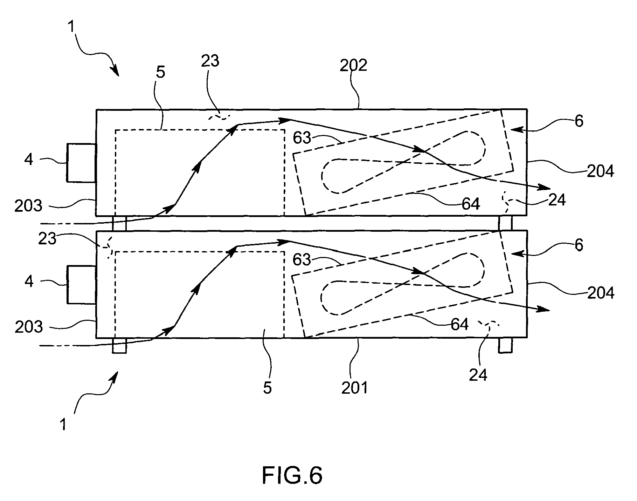

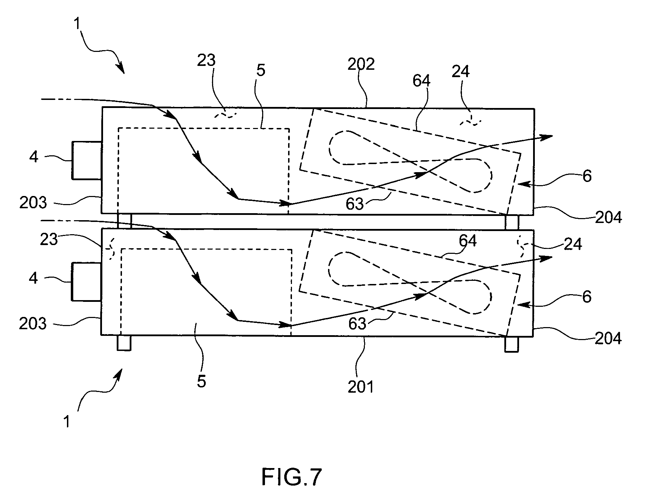

For example, the position of forming the intake holes 21 in the casing 2 may be a position so long as the outside air sucked into the casing 2 from the intake holes 21 is blown onto the heat radiation fin 5 and may be any one of the bottom wall 201 and the top wall 202. Herein, in the case where the intake holes 21 are formed in the bottom wall 201, the fan 6 is preferably arranged inside the casing 2 in a manner that the intake face 63 is oriented upward and the exhaust face 64 is oriented downward as shown in Fig. 6. In the case where the intake holes 21 are formed in the top wall 202, the fan 6 is preferably arranged inside the casing 2 in a manner that the intake face 63 is oriented downward and the exhaust face 64 is oriented upward as shown in Fig. 7. By setting the orientation of the fan 6 like this, it becomes easy that the outside air sucked through the intake holes 21 is brought into contact with the heat radiation fin 5.

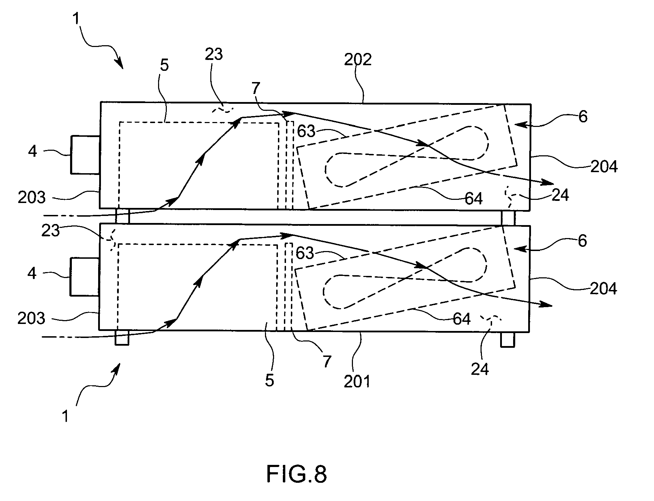

Further, in the case where there is a gap between the frame 62 of the fan 6 and the casing 2, a partitioning plate 7 may be provided between the heat radiation fin 5 and the fan 6 as shown in Fig. 8 so as to guide the outside air sucked through the intake holes 21 to be easily brought into contact with the heat radiation fin 5.

The number of the LED units 3 to be set is not limited to two, and one and three or more units may be set. Also, the colors of the lights emitted by the multiple LED units 3 may be the same color.

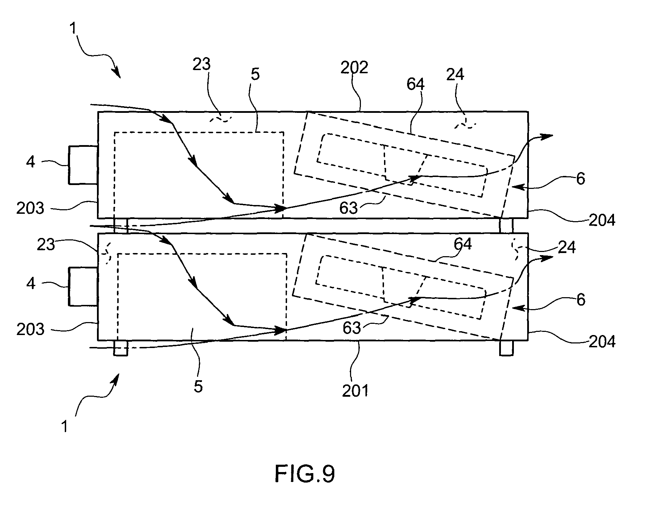

The fan 6 used in the present invention is not limited to an axial flow air blower such as a propeller fan blowing air along the axial direction as is used in the above embodiment, and, as shown in Fig. 9, for example, a centrifugal blower such as a multi-bladed fan or a turbo-fan blowing air in a direction (centrifugal direction) perpendicular to the shaft thereof or an oblique flow blower such as an oblique flow fan or a mixed flow fan blowing air in an oblique direction with respect to the shaft thereof may be used.

In addition, the present invention is not limited to each of the above embodiments and the various components thereof described above may be partially or entirely combined appropriately.

### Industrial Applicability

According to the light source device pertaining to the present invention, since it is not affected by the exhaust heat of the upper and lower devices even though the multiple devices are stacked in the vertical direction to be used, it is possible to exert an excellent cooling efficiency.

### Reference Signs List

- 1: Light source device
- 2: Casing
- 21: Intake hole
- 22: Exhaust hole
- 23: Front chamber
- 24: Rear chamber
- 204: Rear wall
- 3: LED unit (light source)
- 5: Heat radiation fin
- 6: Fan

## Claims

1. A light source device for use as one of multiple light source devices stacked in a vertical direction, comprising:
a casing having a sufficiently small size in height relative to a size in depth and a size in width, wherein, in a wall thereof, an intake hole is formed for taking in outside air into the casing and an exhaust hole is formed for exhausting air from the inside;
a fan arranged inside the casing in a manner that a rotating shaft thereof is inclined with respect to the height direction of the casing and partitioning the interior of the casing into a front chamber and a rear chamber so as to form an air flow from the intake hole to the exhaust hole;
a light source accommodated inside the front chamber of the casing; and
a heat radiation fin provided to be thermally connected to the light source inside the front chamber of the casing, wherein
the intake hole is formed in the wall of the front chamber of the casing and the exhaust hole is formed in a rear wall of the casing.

2. The light source device according to claim 1, wherein the fan includes a blade wheel and a frame surrounding the blade wheel, and wherein the frame is contacted with a top wall, a bottom wall and side walls of the casing.

3. The light source device according to claim 1 comprising a cylindrical member provided to be protruded from the front wall of the casing so as to be adapted to introduce light emitted by the light source from a proximal end thereof and derive the light from a tip end thereof, wherein a light guide is connectable to the tip end thereof.
